(19) Europäisches Patentamt / European Patent Office / Office européen des brevets

(11) **EP 3 816 598 A1**

(12) **EUROPÄISCHE PATENTANMELDUNG**

(43) Veröffentlichungstag:
**05.05.2021  Patentblatt 2021/18**

(51) Int Cl.:
*G01L 1/22* (2006.01)          *G01L 5/00* (2006.01)
*G01L 5/161* (2020.01)         *B21C 51/00* (2006.01)
*B21C 3/14* (2006.01)          *B21C 3/12* (2006.01)
*B21C 1/12* (2006.01)

(21) Anmeldenummer: **19206446.7**

(22) Anmeldetag: **31.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **FMS Force Measuring Systems AG
8154 Oberglatt (CH)**

(72) Erfinder: **INHELDER, Jörg
8309 Nürensdorf (CH)**

(74) Vertreter: **Zeuner Summerer Stütz
Patent- und Rechtsanwälte
Partnerschaft
Nußbaumstraße 8
80336 München (DE)**

(54) **KRAFTMESSEINRICHTUNG ZUR MESSUNG VON ZIEHKRÄFTEN BEIM DRAHTZIEHEN**

(57)     Die Erfindung betrifft eine Kraftmesseinrichtung (10) zur Erfassung von Ziehkräften auf ein Ziehgut (30) in drei Dimensionen, mit
- einem Krafteinleitungselement (12) und einem beabstandet angeordneten Abstützelement (14), die jeweils eine Durchtrittsöffnung für das Ziehgut (30) aufweisen,
- einem oder mehreren, in drei Dimensionen verformbaren Verbindungelementen (16), die das Krafteinleitungselement (12) und das Abstützelement (14) verbinden und
- einer Mehrzahl von auf den Verbindungelementen (16) angeordneten Messelementen (18) zur Erfassung der durch die Ziehkräfte erzeugten Verformungen der Verbindungselemente (16) in drei Dimensionen.

Die Erfindung betrifft auch ein System (100) zum Drahtziehen mit schrägem Drahtauslauf mit einer solchen Kraftmesseinrichtung.

Fig. 1

EP 3 816 598 A1

**Beschreibung**

Die Erfindung betrifft eine Kraftmesseinrichtung zur Erfassung von Ziehkräften auf ein Ziehgut und dabei insbesondere die Messung von Ziehkräften beim Drahtziehen. Die Erfindung betrifft auch ein System zum Drahtziehen mit einer solchen Kraftmesseinrichtung.

Beim Drahtziehen wird ein Rohrdraht mittels eines Capstans durch eine sich verjüngende Öffnung eines in einem Ziehkasten angeordneten Ziehsteins gezogen und dabei der Ausgangsdurchmesser des Rohdrahts ohne Materialverlust reduziert. Je nach Anforderung können auch mehrere aufeinanderfolgende Ziehvorgänge mit sukzessive kleiner werdenden Ziehdüsen erforderlich sein, um einen gewünschten Fertigdurchmesser des Drahts zu erreichen.

Dabei ist es wünschenswert, die beim Ziehvorgang auftretenden Kräfte und Temperaturen messen zu können, um Rückschlüsse auf den Verschleiß des Ziehsteins, fehlendes Schmiermittel und andere Fehlerzustände ziehen zu können. Bei manchen Anwendungen ist es darüber hinaus wünschenswert, einen schrägen Drahtauslauf des Drahts aus dem Ziehkasten einstellen zu können, beispielsweise um ein leichteres Aufwickeln des durch den schrägen Auslauf leicht vorgebogenen Drahts zu ermöglichen.

Hier setzt die Erfindung an. Der Erfindung, wie sie in den Ansprüchen gekennzeichnet ist, liegt die Aufgabe zugrunde eine Kraftmesseinrichtung bereitzustellen, mit der die Ziehkräfte auf ein Ziehgut, insbesondere die beim Drahtziehen auftretenden Ziehkräfte erfasst werden können. Idealerweise sollen Ziehkräfte in drei Dimensionen, wie sie bei einem schrägen Drahtauslauf beim Drahtziehen auftreten, erfasst werden können. Die Erfindung soll auch ein System zum Drahtziehen mit schrägem Drahtauslauf bereitstellen.

Diese Aufgabe wird durch die Merkmale der unabhängigen Ansprüche gelöst. Weiterbildungen der Erfindung sind Gegenstand der abhängigen Ansprüche.

Die Erfindung stellt eine Kraftmesseinrichtung zur Erfassung von Ziehkräften auf ein Ziehgut in drei Dimensionen bereit, die insbesondere der Erfassung der beim Drahtziehen auf einen Ziehdraht in drei Dimensionen wirkenden Ziehkräfte dienen kann.

Die erfindungsgemäße Kraftmesseinrichtung enthält ein Krafteinleitungselement und ein beabstandet angeordnetes Abstützelement, welche jeweils eine Durchtrittsöffnung für das Ziehgut aufweisen, sowie ein oder mehrere, in drei Dimensionen verformbare Verbindungelemente, die das Krafteinleitungselement und das Abstützelement verbinden.

Die Kraftmesseinrichtung enthält ferner eine Mehrzahl von auf den Verbindungelementen angeordneten Messelementen zur Erfassung der durch die Ziehkräfte erzeugten Verformungen der Verbindungselemente in drei Dimensionen.

Auch wenn grundsätzlich eine Ausgestaltung mit nur einem Verbindungselement möglich ist, sind vorteilhaft mehrere, insbesondere zwei, vier, sechs oder acht Verbindungselemente vorgesehen. Ein allgemeine Bezugnahme auf Verbindungselemente schließt nachfolgend stets die Variante nur eines Verbindungselements ein.

Die genannten Verbindungselemente sind mit Vorteil S-förmig verbiegbar, insbesondere sind die Verbindungselemente mit besonderem Vorteil in x- und y-Richtung S-förmig verbiegbar und in z-Richtung dehnbar oder stauchbar. Als z-Richtung wird dabei die axiale Hauptrichtung der Kraftmesseinrichtung bezeichnet, die x- und y-Richtung stehen auf dieser axialen Hauptrichtung senkrecht.

In einer vorteilhaften Ausgestaltung sind die Verbindungselemente durch eine Mehrzahl von Verbindungsbalken mit polygonalem Querschnitt gebildet. Die Verbindungsbalken sind dabei zweckmäßig in gleichen Winkelabständen entlang eines Umfangs des Krafteinleitungselements bzw. des Abstützelements angeordnet. Insbesondere können die Verbindungselemente durch eine Mehrzahl von quaderförmigen Verbindungsbalken mit rechteckigem, insbesondere quadratischem Querschnitt gebildet sein. Die genannten Messelemente sind dabei vorteilhaft auf den Seitenflächen der quaderförmigen Verbindungsbalken angeordnet.

Mit besonderem Vorteil sind die Messelemente jeweils an Stellen der Verbindungelemente angeordnet, an denen nur von einer Kraftrichtung erzeugte mechanische Spannungen auftreten, also nur von Kräften in x-, y- oder z-Richtung erzeugte mechanische Spannungen. Dadurch werden die Kraftkomponenten der Ziehkraft mechanisch entkoppelt und können besonders einfach und zuverlässig erfasst werden. Die Messelemente sind insbesondere durch Dehnmessstreifen gebildet, deren Dehnung ein Maß für die wirkende Kraft ist.

In einer zweckmäßigen Ausgestaltung ist das Krafteinleitungselement und/oder das Abstützelement in Form einer Scheibe mit einer Durchtrittsöffnung für das Ziehgut ausgebildet. Ebenfalls zweckmäßig können das Krafteinleitungselement und/oder das Abstützelement in Form eines schmalen Rings mit einer Durchtrittsöffnung für das Ziehgut ausgebildet sein. In einer besonders bevorzugten Ausgestaltung ist das Krafteinleitungselement in Form einer Scheibe und das Abstützelement in Form eines schmalen Rings, beide mit einer Durchtrittsöffnung für das Ziehgut, ausgebildet. Die Durchtrittsöffnungen von Krafteinleitungselement und Abstützelement sind mit Vorteil konzentrisch und gegebenenfalls axial voneinander beabstandet angeordnet.

Das Krafteinleitungselement und das Abstützelement sind in einer zweckmäßigen Ausgestaltung in radialer Richtung beabstandet und dabei insbesondere konzentrisch angeordnet. Gegenwärtig ist allerdings besonders bevorzugt, dass das Krafteinleitungselement und das Abstützelement nicht in radialer, sondern in axialer Richtung beabstandet sind und dass sich die Verbindungselemente ebenfalls in axialer Richtung erstrecken. Da die Schrägstellung des Ziehguts beim Ziehvorgang in der Regel relativ gering ist und typischerweise nur wenige Grad beträgt, wirken die größten Kräfte auf die Verbindungselemente in axialer Richtung -sich axial erstreckende Verbindungselemente bieten dann den Vorteil, dass die Richtung, in der die größten Kräfte wirken, mit der Richtung der größten Stabilität der Verbindungselemente zusammenfällt.

In einer besonders vorteilhaften Ausgestaltung ist die Kraftmesseinrichtung eine Drahtzieh-Kraftmesseinrichtung zur Erfassung von Ziehkräften auf einen Ziehdraht in drei Dimensionen.

Die erfindungsgemäße Kraftmesseinrichtung erlaubt eine Erfassung von Ziehkräften in drei Dimensionen, wie sie insbesondere beim Drahtziehen mit schrägem Drahtauslauf auftreten. Anders als Kraftmesseinrichtungen, die nur die axiale Kraftkomponente der auf den Draht wirkenden Ziehkräfte messen können, liefert die erfindungsgemäße Kraftmesseinrichtung zusätzlich Informationen über die Richtung des Drahtauslaufs bei einem schrägen Ziehvorgang. Sie kann daher mit besonderem Vorteil zur kontrollierten Einstellung eines gewünschten schrägen Drahtauslaufs eingesetzt werden.

Hierzu enthält die Erfindung weiter ein System zum Drahtziehen mit schrägem Drahtauslauf. Das genannte System enthält einen Ziehkasten mit einem Ziehstein zur Reduzierung des Durchmessers eines Ziehdrahts, und eine zwischen dem Ziehstein und einer Gehäusewand des Ziehkastens angeordnete Kraftmesseinrichtung der beschriebenen Art.

Das System enthält weiter eine Verstelleinrichtung zum Verstellen von Lage und/oder Orientierung des Ziehkastens, sowie eine Regelungseinrichtung, die eingerichtet und ausgelegt ist, mittels der genannten Kraftmesseinrichtung die Ziehkräfte des in seinem Durchmesser reduzierten Drahts in drei Dimensionen zu bestimmen, die mittels der Kraftmesseinrichtung bestimmten Ziehkräfte mit vorbestimmten Sollziehkräften für einen gewünschten schrägen Drahtauslauf zu vergleichen, und auf Grundlage des Vergleichs die Lage und/oder Orientierung des Ziehkastens mittels der Verstelleinrichtung nachzuführen, um die mittels der Kraftmesseinrichtung bestimmten Ziehkräfte den vorbestimmten Sollziehkräften anzugleichen.

Zweckmäßig enthält die Verstelleinrichtung einen oder mehrere Schrittmotoren oder einen oder mehrere DC-Motoren mit Schneckengetriebe, mit denen die Lage und/oder Orientierung des Ziehkastens verstellt werden kann.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1    eine schematische Darstellung einer erfindungsgemäßen Kraftmesseinrichtung mit Ziehstein und Ziehdraht,

Fig. 2    eine perspektivische Ansicht einer Kraftmesseinrichtung nach einem Ausführungsbeispiel der Erfindung,

Fig. 3    in (a) und (b) eine Illustration der Spannungen bzw. Verformungen der Kraftmesseinrichtung der Fig. 2 bei unabhängig voneinander eingeleiteten Kräften in y-Richtung bzw. z-Richtung,

Fig. 4    eine Abwandlung der Kraftmesseinrichtung der Fig. 1,

Fig. 5    eine schematische Darstellung einer Kraftmesseinrichtung nach einem anderen Ausführungsbeispiel der Erfindung, in (a) im Querschnitt und in (b) in Aufsicht,

Fig. 6    eine konkrete Ausgestaltung der Kraftmesseinrichtung der Fig. 4 in Aufsicht, und

Fig. 7    schematisch ein System zum Drahtziehen mit schrägem Drahtauslauf mit einer Kraftmesseinrichtung der beschriebenen Art.

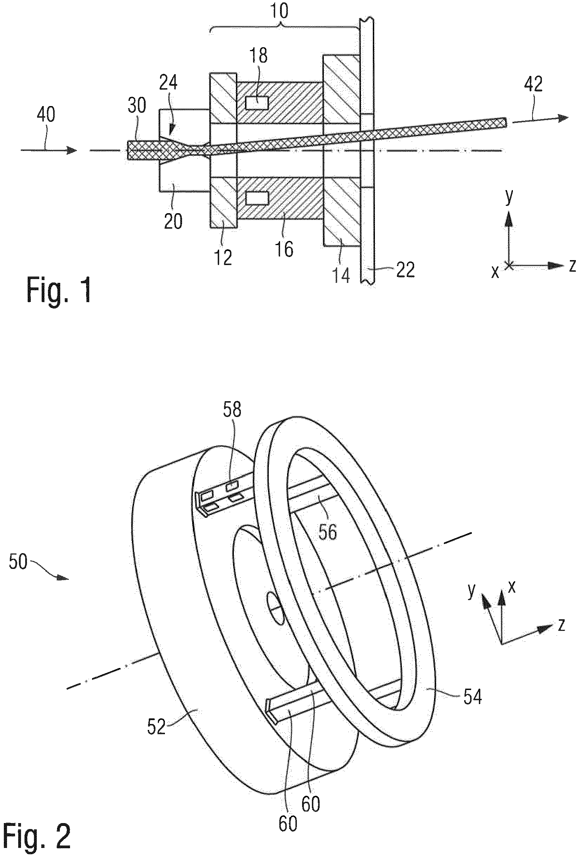

Die Erfindung wird nun am Beispiel einer Kraftmesseinrichtung zur Messung von Ziehkräften beim Drahtziehen in drei Dimensionen erläutert. Figur 1 zeigt hierzu eine schematische Darstellung einer erfindungsgemäßen Kraftmesseinrichtung 10, die zwischen einem Ziehstein 20 und einer Gehäusewand 22 eines Ziehkastens angeordnet ist.

Beim Drahtziehen wird ein Draht 30, der aus einer Drahteinlaufrichtung 40 in den Ziehstein einläuft, durch die sich verjüngende Öffnung 24 des Ziehsteins 20 gezogen und dabei der Durchmesser des Drahts reduziert. In manchen Anwendungen ist es vorteilhaft, wenn die Drahtauslaufrichtung 42 nicht eine Verlängerung der Drahteinlaufrichtung 40 darstellt, sondern einige Grad schräg zur Drahteinlaufrichtung 40 verläuft. Durch die Schrägstellung erhält der durchmesserreduzierte Draht insbesondere eine leichte Vorbiegung, die ein leichteres Aufwickeln ermöglicht.

Zur vollständigen Messung der beim schrägen Drahtziehen auftretenden Kräfte müssen die Ziehkräfte in drei Dimensionen erfasst werden. Dabei wird die durch die Drahteinlaufrichtung 40 definierte axiale Richtung der Kraftmesseinrichtung 10 als z-Richtung bezeichnet, die darauf senkrecht stehenden Richtungen als x- und y-Richtung. In der Ausgestaltung der Fig. 1 ist die x-Richtung parallel zum Boden und zeigt in der Darstellung der Fig. 1 in die Papierebene hinein, während die y-Richtung senkrecht nach oben zeigt.

Die erfindungsgemäße Kraftmesseinrichtung 10 umfasst nun ein Krafteinleitungselement 12 zur Krafteinleitung vom Ziehstein 20 und ein axial beabstandet angeordnetes Abstützelement 14 zur Aufnahme der Kräfte beispielsweise an der Gehäusewand 22 des Ziehkastens. Das Krafteinleitungselement 12 und das Abstützelement 14 weisen konzentrisch angeordnete Durchtrittsöffnungen auf, durch die der Draht 30 beim Drahtziehen durchläuft.

Als Besonderheit weist die Kraftmesseinrichtung 10 eine Mehrzahl von in drei Dimensionen verformbaren Verbindungelementen 16 auf, die das Krafteinleitungselement 12 und das axial beabstandete Abstützelement 14 verbinden und die mit einer Mehrzahl von Messelementen 18 versehen sind, mit denen die durch die Ziehkräfte des Drahts 30 erzeugten Verformungen der Verbindungselemente 16 in drei Dimensionen erfasst werden können.

Figur 2 zeigt eine perspektivische Ansicht eines Ausführungsbeispiels der Erfindung, bei dem die Kraftmesseinrichtung 50 eine Krafteinleitungsscheibe 52 mit einer Durchtrittsöffnung für den Ziehdraht und einen axial von der Scheibe 52 beabstandeten Abstützring 54 enthält. Die Verbindungselemente sind bei dem gezeigten Ausführungsbeispiel durch vier quaderförmige Verbindungsbalken 56 mit quadratischem Querschnitt gebildet, die in gleichen Winkelabständen entlang des Umfangs des Abstützrings 54 angeordnet sind und sich mit ihrer Längsachse in axialer Richtung der Kraftmesseinrichtung, also parallel zur z-Achse erstrecken. Konkret sind die Verbindungsbalken 56 im Ausführungsbeispiel auf dem Umfang von Ring 54 und Scheibe 52 bei Winkeln $\alpha$ = 0°, 90°, 180°und 270°, ausgehend von der positiven x-Achse angeordnet.

Die Verbindungsbalken 56 sind mit ihren Seitenflächen 60 parallel zueinander orientiert, so dass sich die Seitenflächen 60 im unverformten Zustand der Verbindungsbalken 56 parallel entweder zur x-z-Ebene oder zur y-z-Ebene erstrecken.

Die Messelemente sind im Ausführungsbeispiel durch eine Mehrzahl von Dehnmessstreifen 58 gebildet, die, wie nachfolgend genauer erläutert, jeweils an den Stellen der Verbindungsbalken 56 angeordnet sind, an denen bei der Krafteinleitung nur von einer einzigen Kraftrichtung erzeugte mechanische Spannungen auftreten. Dadurch können die verschiedenen Kraftrichtungen von den jeweils zugehörigen Dehnmessstreifen bereits bei der Messung getrennt erfasst werden und es entfällt die Notwendigkeit, die verschiedenen Kraftkomponenten nach der Erfassung in einer Auswerteeinheit elektronisch zu entkoppeln. Während eine elektronische Entkoppelung erfindungsgemäß ebenfalls möglich ist und gegebenenfalls zusätzlich vorgesehen sein kann, erlaubt die mechanische Entkoppelung eine besonderes einfache, gegen Störungen unempfindliche und robuste Erfassung der Kraftkomponenten.

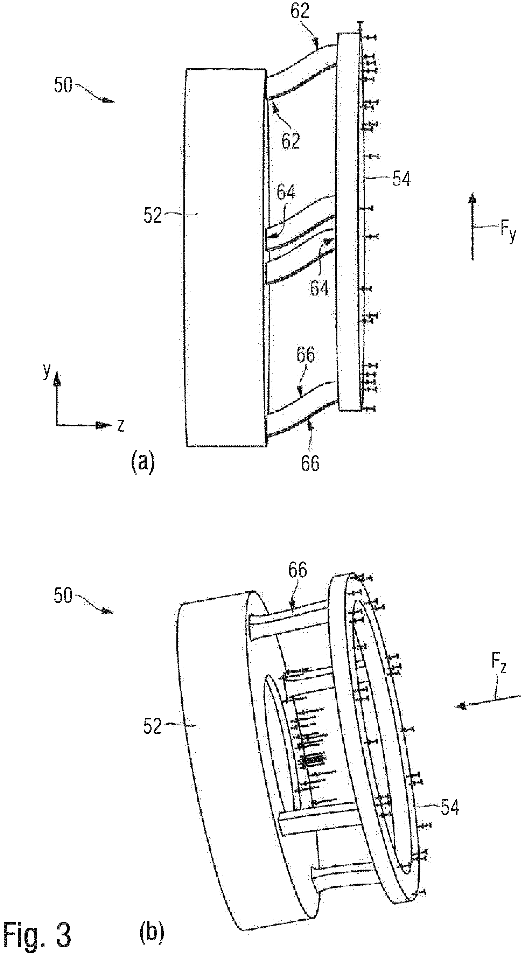

Zur Illustration dieser mechanischen Entkopplung sind in Fig. 3 die Spannungen bzw. Verformungen der Kraftmesseinrichtung 50 bei unabhängig voneinander eingeleiteten Kräften in y-Richtung (Fig. 3a) bzw. z-Richtung (Fig. 3b) gezeigt. Die Verformungen sind der klareren Darstellung halber wie üblich mit stark übertriebenen Amplituden dargestellt. Die Wirkung einer nur in x-Richtung eingeleiteten Kraft ergibt sich aus Symmetriegründen aus der Darstellung der Fig. 3a durch Drehung um 90° um die z-Achse.

Mit Bezug zunächst auf Fig. 3a wird bei einer Krafteinleitung in +y-Richtung der Abstützring 54 in +y-Richtung gegen die Krafteinleitungsscheibe 52 verschoben und die Verbindungsbalken 56 dadurch S-förmig in y-Richtung verbogen. Diese Verbiegung erzeugt an den zur x-z-Ebene parallelen Oberseiten und Unterseiten der Balken 56 angrenzend an die Scheibe 52 bzw. den Ring 54 jeweils Stellen 62 größter Dehnung bzw. Stauchung, an denen vorteilhaft Dehnmessstreifen für die Messung der y-Komponente der Ziehkraft vorgesehen werden.

An den zur y-z-Ebene parallelen Vorder- und Rückseiten der Balken 56 befinden sich angrenzend an die Scheibe 52 bzw. den Ring 54 jeweils neutrale Stellen 64, an denen bei Krafteinleitung in y-Richtung keine oder nur minimale Spannungen auftreten. Dagegen zeigen diese Stellen 64 bei Krafteinleitung nur in x-Richtung eine maximale Dehnung bzw. Stauchung, so dass dort vorteilhaft Dehnmessstreifen für die Messung der x-Komponente der Ziehkraft vorgesehen werden.

Weiter lassen sich an allen Seitenflächen 60 der Verbindungsbalken 56 in einem Mittenbereich neutrale Stellen 66 finden, an denen sowohl bei Krafteinleitung in x-Richtung als auch bei Krafteinleitung in y-Richtung keine oder nur minimale Spannungen auftreten. Diese Stellen 66 zeigen dagegen maximale Stauchung bei Krafteinleitung nur in z-Richtung, wie in Fig. 3b illustriert, so dass dort vorteilhaft Dehnmessstreifen für die Messung der z-Komponente der Ziehkraft vorgesehen werden.

Werden also wie beschrieben Dehnmessstreifen an den Stellen 62, 64 und 66 der Verbindungsbalken 56 angeordnet, so sind die erfassten Dehnungen und Stauchungen jeweils ein Maß für die Größe der Kraftkomponenten in x-Richtung (Stellen 64), in y-Richtung (Stellen 62) bzw. in z-Richtung (Stellen 66). Da die verschiedenen Kraftkomponenten somit bereits mechanisch entkoppelt erfasst werden, kann die Weiterverarbeitung und Auswertung der Messwerte zur Bestimmung der Zugkraft in drei Dimensionen besonders einfach und zuverlässig erfolgen.

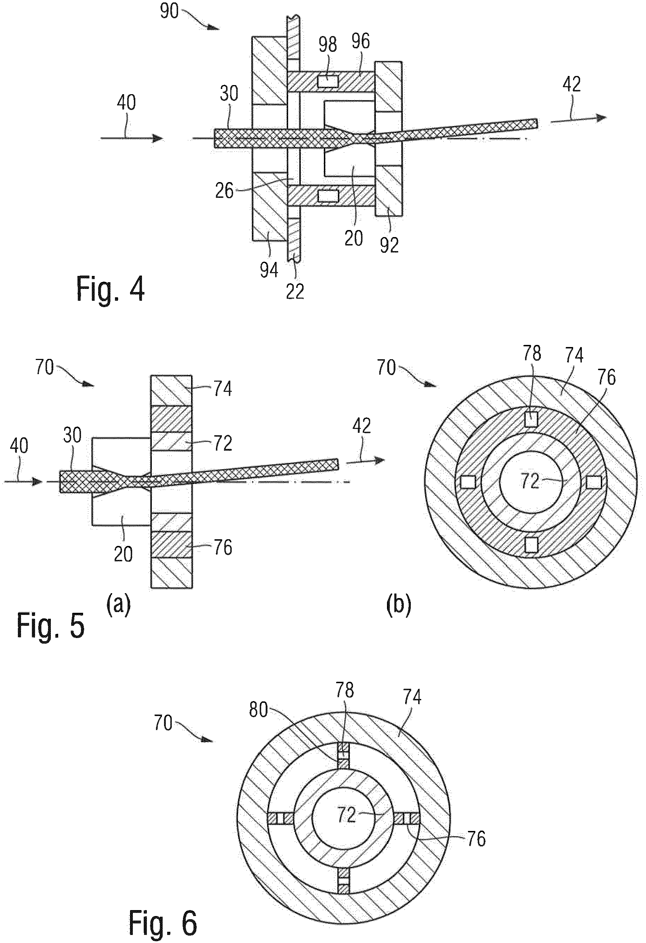

Die Krafteinleitung in z-Richtung kann nicht nur bei Stauchung, sondern auch bei Dehnung der Verbindungselemente gemessen werden, wie in der Abwandlung der Fig. 4 gezeigt. Bei der dort dargestellten Kraftmesseinrichtung 90 ist die Abfolge von Krafteinleitungselement und Abstützelement in axialer Richtung gegenüber der Gestaltung der Fig. 1 vertauscht. Genauer umfasst die Kraftmesseinrichtung 90 ein Krafteinleitungselement 92 zur Krafteinleitung vom Ziehstein 20 und ein axial beabstandet angeordnetes Abstützelement 94 zur Aufnahme der Kräfte beispielsweise an der Gehäusewand 22 des Ziehkastens. Die Kraftmesseinrichtung 90 umfasst weiter eine Mehrzahl von in drei Dimensionen verformbaren Verbindungelementen 96, die das Krafteinleitungselement 92 und das axial beabstandete Abstützelement 94 durch eine Öffnung 26 in der Gehäusewand 22 hindurch verbinden und die mit einer Mehrzahl von Messelementen 98 versehen sind, mit denen die durch die Ziehkräfte des Drahts 30 erzeugten Verformungen der Verbindungselemente 96 in drei Dimensionen erfasst werden können.

Wie in Fig. 4 ersichtlich, wirken auf die Verbindungselemente 96 beim Ziehen des Drahts 30 in Drahtauslaufrichtung 42 Kräfte in drei Dimensionen, wobei allerdings die Kraft in z-Richtung nicht wie bei Fig. 1 zu einer Stauchung, sondern zu einer Dehnung der Verbindungselemente 96 führt.

Figur 5 zeigt eine Kraftmesseinrichtung 70 nach einem weiteren Ausführungsbeispiel der Erfindung. Die Kraftmesseinrichtung 70 enthält ein Krafteinleitungselement 72 und ein Abstützelement 74, die radial beabstandet und konzentrisch zueinander angeordnet sind, wie in Fig. 5a im Querschnitt und in Fig. 5b in Aufsicht schematisch gezeigt. Das Krafteinleitungselement 72 und das Abstützelement 74 weisen konzentrisch angeordnete Durchtrittsöffnungen auf, durch die der Draht 30 beim Drahtziehen läuft.

Das Krafteinleitungselement 72 und das Abstützelement 74 sind über eine oder mehrere Verbindungselemente 76 verbunden, wobei auf den Verbindungselementen 76 eine Mehrzahl von Messeinrichtungen 78 angeordnet ist, mit denen die durch die Ziehkräfte des Drahts 30 erzeugten Verformungen der Verbindungselemente 76 in drei Dimensionen erfasst werden können.

Figur 6 zeigt in Aufsicht eine konkrete Ausgestaltung der Kraftmesseinrichtung 70 der Fig. 5, bei welcher die Verbindungselemente durch vier quaderförmige Verbindungsbalken 76 mit quadratischem Querschnitt gebildet sind, die einen inneren Krafteinleitungsring 72 und einen äußeren Abstützrings 74 radial verbinden. Die Verbindungsbalken 76 sind in gleichen Winkelabständen entlang des Umfangs der Ringe 72, 74 angeordnet und erstrecken sich mit ihrer Längsachse jeweils in radialer Richtung der Kraftmesseinrichtung. Konkret befinden sich die Verbindungsbalken 76 auf dem Umfang bei $\alpha$ = 0°, 90°, 180°und 270°, ausgehend von der positiven x-Achse.

Wie in Fig. 6 erkennbar, erstrecken sich die Vorderflächen 80 der Verbindungsbalken 76 im unverformten Zustand parallel zur x-y-Ebene, während die Seitenflächen alternierend parallel zur x-z bzw. y-z-Ebene orientiert sind.

Auf den Vorderflächen 80 und den Seitenflächen der Verbindungsbalken 76 ist eine Mehrzahl von Dehnmessstreifen 78 vorgesehen, mit denen, wie bei der Ausgestaltung der Figuren 2 und 3, jeweils nur die von einer Kraftrichtung erzeugten mechanischen Spannungen in den Verbindungsbalken 76 erfasst werden können.

Wie erwähnt, sind allerdings nach gegenwärtigem Verständnis in den meisten Anwendungen Gestaltungen vorteilhaft, bei denen das Krafteinleitungselement und das Abstützelement in axialer Richtung beabstandet sind und bei denen sich die Verbindungselemente ebenfalls in axialer Richtung erstrecken, wie in den Figuren 1 bis 4 gezeigt, da dann die Richtung der größten Kräfte mit der Richtung der größten Stabilität der Verbindungselemente zusammenfällt.

Die erfindungsgemäßen Kraftmesseinrichtungen können nicht nur bei ruhenden Ziehsteinen, sondern auch bei rotierenden Ziehsteinen eingesetzt werden. Durch die Rotation kann insbesondere eine gleichmäßigere Abnutzung der Ziehsteine erreicht werden. Bei einem rotierenden Ziehstein kann die Zugkraft nicht direkt vom Ziehstein in das Krafteinleitungselement geleitet werden, sondern der Ziehstein ist beispielsweise in einer drehbaren Hülse angeordnet, von der die Ziehkraft über ein Wälzlager auf das Krafteinleitungselement der Kraftmesseinrichtung übertragen wird.

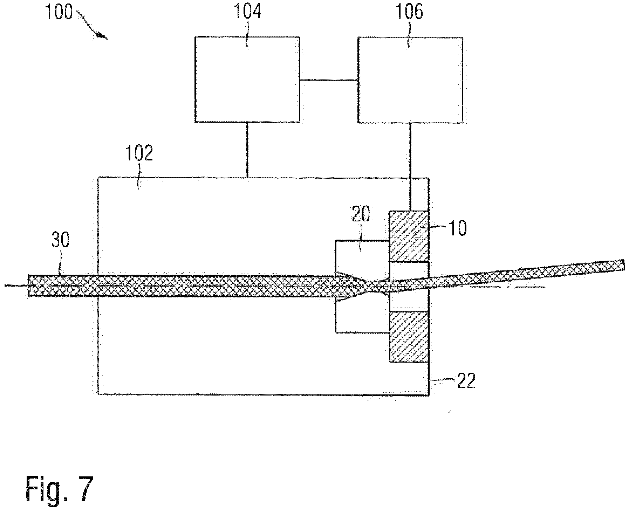

Eine Kraftmesseinrichtung nach einer der oben beschriebenen Varianten kann vorteilhaft in einem System 100 zum Drahtziehen mit schrägem Drahtauslauf eingesetzt werden, wie in Fig. 7 schematisch illustriert. Das System 100 stellt ein Regelsystem dar, mit dem der schräge Drahtauslauf automatisch so eingeregelt werden kann, dass eine definierte, vorgewählte Verformung des auslaufenden Drahts auftritt.

Das erfindungsgemäße System 100 enthält hierzu einen Ziehkasten 102 mit einem Ziehstein 20 zur Reduzierung des Durchmessers eine Ziehdrahts 30, sowie eine zwischen dem Ziehstein 20 und einer Gehäusewand 22 des Ziehkastens 102 angeordneten Kraftmesseinrichtung 10, beispielsweise eine Kraftmesseinrichtung der in Zusammenhang mit den Figuren 2 und 3 näher beschriebenen Art.

Das System 100 enthält weiter eine Verstelleinrichtung 104 zum Verstellen von Lage und/oder Orientierung des Ziehkastens 102, die beispielsweise mit Schrittmotoren oder DC-Motoren mit Schneckenantrieb arbeitet.

Zur Regelung des schrägen Drahtauslaufs ist in dem System 100 eine Regelungseinrichtung 106 vorgesehen, die die von den Dehnmessstreifen der Kraftmesseinrichtung 10 gelieferten Signale empfängt und auswertet um die auf den auslaufenden Ziehdraht 30 wirkenden Ziehkräfte $F_w$ in drei Dimensionen

$$F_w = (F_{w,x}, F_{w,y}, F_{w,z})$$

zu bestimmen. Dies ist durch die oben beschriebene mechanische Entkoppelung der drei Komponenten der Ziehkraft erfindungsgemäß besonders einfach und zuverlässig möglich.

Die Regelungseinrichtung 106 vergleicht dann die mittels der Kraftmesseinrichtung 10 bestimmten Ziehkräfte $F_{w,x}$, $F_{w,y}$ in x- und y-Richtung mit für den verwendeten Drahttyp vorbestimmten Sollziehkräften $F_{soll,x}$, $F_{soll,y}$ für den gewünschten schrägen Drahtauslauf. Diese Sollziehkräfte hängen vom verwendeten Drahttyp ab und werden vorab bestimmt und sind der Regelungseinrichtung beispielsweise eingespeichert.

Die Regelungseinrichtung 106 führt dann auf Grundlagen des Vergleichsergebnisses die Lage und/oder Orientierung des Ziehkastens 102 mittels der Verstelleinrichtung 104 nach, um die x- und y-Komponente der erfassten Ziehkräfte $F_w$ den vorbestimmten Sollziehkräften $F_{soll}$ in diesen Richtungen anzugleichen und dadurch den gewünschten schrägen Auslaufwinkel einzuregeln.

Es versteht sich, dass das System 100 auch mit einer Kraftmesseinrichtung der in einer der Figuren 4 bis 6 gezeigten Art ausgestattet sein kann. Auch kann ein drehbarer Ziehstein vorgesehen sein und der Kraftfluß vom Ziehstein über eine drehbare Hülse des Ziehsteins und ein Wälzlager in das Krafteinleitungselement der Kraftmesseinrichtung verlaufen.

**Patentansprüche**

1. Kraftmesseinrichtung zur Erfassung von Ziehkräften auf ein Ziehgut in drei Dimensionen, mit

   - einem Krafteinleitungselement und einem beabstandet angeordneten Abstützelement, die jeweils eine Durchtrittsöffnung für das Ziehgut aufweisen,
   - einem oder mehreren, in drei Dimensionen verformbaren Verbindungelementen, die das Krafteinleitungselement und das Abstützelement verbinden und
   - einer Mehrzahl von auf den Verbindungelementen angeordneten Messelementen zur Erfassung der durch die Ziehkräfte erzeugten Verformungen der Verbindungselemente in drei Dimensionen.

2. Kraftmesseinrichtung nach Anspruch 1, **dadurch gekennzeichnet, dass** mehrere, insbesondere zwei, vier, sechs oder acht Verbindungselemente vorgesehen sind.

3. Kraftmesseinrichtung nach Anspruch 1 oder 2, **dadurch gekennzeichnet, dass** die Verbindungselemente S-förmig verbiegbar sind.

4. Kraftmesseinrichtung nach einem der Ansprüche 1 bis 3, **dadurch gekennzeichnet, dass** die Verbindungselemente durch eine Mehrzahl von Verbindungsbalken mit polygonalem Querschnitt gebildet sind.

5. Kraftmesseinrichtung nach Anspruch 4, **dadurch gekennzeichnet, dass** die Verbindungsbalken in gleichen Winkelabständen entlang eines Umfangs des Krafteinleitungselements und/oder des Abstützelements angeordnet sind.

6. Kraftmesseinrichtung nach einem der Ansprüche 1 bis 5, **dadurch gekennzeichnet, dass** die Verbindungselemente durch eine Mehrzahl von quaderförmigen Verbindungsbalken mit rechteckigem, insbesondere quadratischem Querschnitt gebildet sind.

7. Kraftmesseinrichtung nach Anspruch 6, **dadurch gekennzeichnet, dass** die Messelemente auf den Seitenflächen der quaderförmigen Verbindungsbalken angeordnet sind.

8. Kraftmesseinrichtung nach einem der Ansprüche 1 bis 7, **dadurch gekennzeichnet, dass** die Messelemente jeweils an Stellen der Verbindungelemente angeordnet sind, an denen nur von einer Kraftrichtung erzeugte mechanische Spannungen auftreten.

9. Kraftmesseinrichtung nach einem der Ansprüche 1 bis 8, **dadurch gekennzeichnet, dass** die Messelemente durch Dehnmessstreifen gebildet sind.

10. Kraftmesseinrichtung nach einem der Ansprüche 1 bis 9, **dadurch gekennzeichnet, dass** das Krafteinleitungselement und/oder das Abstützelement in Form einer Scheibe mit einer Durchtrittsöffnung für das Ziehgut ausgebildet ist.

11. Kraftmesseinrichtung nach einem der Ansprüche 1 bis 10, **dadurch gekennzeichnet, dass** das Krafteinleitungselement und/oder das Abstützelement in Form eines schmalen Rings mit einer Durchtrittsöffnung für das Ziehgut ausgebildet ist.

12. Kraftmesseinrichtung nach einem der Ansprüche 1 bis 11, **dadurch gekennzeichnet, dass** das Krafteinleitungselement und das Abstützelement in axialer Richtung beabstandet sind und sich die Verbindungselemente ebenfalls in axialer Richtung erstrecken.

13. Kraftmesseinrichtung nach einem der Ansprüche 1 bis 11, **dadurch gekennzeichnet, dass** die Kraftmesseinrichtung eine Drahtzieh-Kraftmesseinrichtung zur Erfassung von Ziehkräften auf einen Ziehdraht in drei Dimensionen ist.

14. System zum Drahtziehen mit schrägem Drahtauslauf, mit

    - einem Ziehkasten mit einem Ziehstein zur Reduzierung des Durchmessers eines Ziehdrahts,
    - einer zwischen dem Ziehstein und einer Gehäusewand des Ziehkastens angeordneten Kraftmesseinrichtung nach einer der vorhergehenden Ansprüche,
    - einer Verstelleinrichtung zum Verstellen von Lage und/oder Orientierung des Ziehkastens, und

- einer Regelungseinrichtung, die eingerichtet und ausgelegt ist, mittels der Kraftmesseinrichtung die Ziehkräfte des in seinem Durchmesser reduzierten Drahts in drei Dimensionen zu bestimmen, die mittels der Kraftmesseinrichtung bestimmten Ziehkräfte mit vorbestimmten Sollziehkräften für einen gewünschten schrägen Drahtauslauf zu vergleichen, und auf Grundlage des Vergleichs die Lage und/oder Orientierung des Ziehkastens mittels der Verstelleinrichtung nachzuführen, um die mittels der Kraftmesseinrichtung bestimmten Ziehkräfte den vorbestimmten Sollziehkräften anzugleichen.

15. System nach Anspruch 14, **dadurch gekennzeichnet, dass** die Verstelleinrichtung einen oder mehrere Schrittmotoren und/oder DC-Motoren mit Schneckengetriebe umfasst.

Fig. 1

Fig. 2

(a)

(b)

# Fig. 3

Fig. 4

Fig. 5

(a)

(b)

Fig. 6

100

104

106

102

30

20

10

22

Fig. 7

**Europäisches Patentamt**
**European Patent Office**
**Office européen des brevets**

# EUROPÄISCHER RECHERCHENBERICHT

Nummer der Anmeldung

EP 19 20 6446

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 012 992 A1 (KLIKO INTERNATIONAL A G [LI]) 9. Juli 1980 (1980-07-09) <br> * Seite 7, Absatz 4 * <br> * Abbildung 3 * <br> ----- | 1-15 | INV. <br> G01L1/22 <br> G01L5/00 <br> G01L5/161 <br> B21C51/00 |
| X | US 3 240 055 A (EDDENS FLETCHER C) 15. März 1966 (1966-03-15) | 1,3,8-15 | B21C3/14 <br> B21C3/12 |
| A | * Spalte 1, Zeile 36 - Spalte 2, Zeile 36 * <br> * Abbildung 1 * <br> ----- | 2,4-7 | B21C1/12 |
| X | US 4 770 049 A (JONES GERALD M [GB] ET AL) 13. September 1988 (1988-09-13) | 1,3,8-15 | |
| A | * Spalte 2, Zeile 64 - Spalte 4, Zeile 2 * <br> * Abbildungen 1-3 * <br> ----- | 2,4-7 | |
| X | DE 100 55 933 A1 (HBM MES UND SYSTEMTECHNIK GMBH [DE]) 23. Mai 2002 (2002-05-23) <br> * Absätze [0023], [0024] * <br> * Abbildungen 5,6 * <br> ----- | 1-15 | |

RECHERCHIERTE SACHGEBIETE (IPC)

G01L

Der vorliegende Recherchenbericht wurde für alle Patentansprüche erstellt

| Recherchenort | Abschlußdatum der Recherche | Prüfer |
|---|---|---|
| Den Haag | 30. April 2020 | Reto, Davide |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 6446

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2020

| Im Recherchenbericht angeführtes Patentdokument | Datum der Veröffentlichung | Mitglied(er) der Patentfamilie | Datum der Veröffentlichung |
|---|---|---|---|
| EP 0012992 A1 | 09-07-1980 | DE 2966415 D1<br>EP 0012992 A1<br>IT 1101198 B | 22-12-1983<br>09-07-1980<br>28-09-1985 |
| US 3240055 A | 15-03-1966 | KEINE | |
| US 4770049 A | 13-09-1988 | GB 2188440 A<br>US 4770049 A | 30-09-1987<br>13-09-1988 |
| DE 10055933 A1 | 23-05-2002 | KEINE | |

Für nähere Einzelheiten zu diesem Anhang : siehe Amtsblatt des Europäischen Patentamts, Nr.12/82

EPO FORM P0461